# EUROPEAN PATENT APPLICATION

(11) **EP 4 502 057 A1**
(43) Date of publication of application: **05.02.2025**
(21) Application number: 23781117.9
(22) Date of filing: 31.03.2023
(51) Int. Cl.: C08L 63/00, C08G 59/22, C08G 59/50, C08K 3/013, C08K 3/22, C08K 3/28

(54) **TWO-COMPONENT CURABLE COMPOSITION AND CURED PRODUCT THEREOF**

(30) Priority: 31.03.2022 JP 2022061110
(71) Applicant: Cosmo Oil Lubricants Co., Ltd., Tokyo 105-8331 (JP)
(72) Inventor: WATANABE, Satoshi, Satte-shi, Saitama 340-0193 (JP)
(74) Representative: Adamson Jones
(86) International application number: PCT/JP2023/013736
(87) International publication number: WO 2023/191109

(57) **Abstract**

A two-component curable composition includes: a liquid A containing an epoxy compound having two epoxy groups and having at least one selected from the group consisting of a divalent aliphatic hydrocarbon group and a polyether structure between the two epoxy groups, a reactive diluent, and a thermally conductive filler; and a liquid B containing an amine compound, a plasticizer, and a thermally conductive filler.

## Description

### Technical Field

The present disclosure relates to a two-component curable composition and a cured product.

### Background Art

In recent years, there has been significant improvement in the performance of electronic devices such as personal computers, mobile phones, personal digital assistants (PDAs), and the like, as well as lighting and display devices such as light emitting diodes (LEDs), electronic luminescent (EL) devices, and the like, which is due to significant improvement in the performance of computational elements and light emitting elements. As the performance of computational elements and light emitting elements has improved, the amount of heat generation has also significantly increased, and the question of how to dissipate heat in electronic devices, lighting, and display devices is an important issue. As a heat countermeasure, in order to transmit heat generated from computational elements and light emitting elements to a heat radiator without loss and dissipate the heat through the heat radiator, the countermeasure of providing thermal interface materials (TIM, thermally conductive materials) between a heat generator and a heat radiator is adopted. As a heat radiator, for example, a heat sink is known, and as a heat generator, for example, a central processing unit (CPU) or a large-scale integration (LSI) is known. A heat dissipation sheet, a thermally conductive grease, a gap filler, and the like are known as TIMs that are in general use, and a gap filler that is a TIM which is initially in paste form and is cured after application to become a solid, is attracting attention.

As a gap filler with excellent flexibility, shape stability, and thermal conductivity, Japanese Patent Application Laid-Open (JP-A) No. 2016-23219, for example, proposes "two-liquid mixing type first and second liquids for protecting a semiconductor element which can be obtained by mixing materials for protecting a semiconductor element applied and used on a surface of a semiconductor element in order to protect the semiconductor element, in which the first liquid and the second liquid are liquids before mixing, the first liquid and the second liquid are used by being mixed, a mixture in which the first liquid and the second liquid are mixed is the material for protecting a semiconductor element, the first liquid contains a flexible epoxy compound and an epoxy compound different from the flexible epoxy compound, the second liquid contains a curing agent that is a liquid at 23°C and a curing accelerator, and at least one of the first liquid or the second liquid contains an inorganic filler having a thermal conductivity of 10 W/m·K or more and a spherical shape".

### SUMMARY OF INVENTION

### Technical Problem

An object of an embodiment of the disclosure is to provide a two-component curable composition from which a cured product having excellent peelability is obtained, and a cured product having excellent peelability.

### Solution to Problem

The disclosure includes the following embodiments.
<1> A two-component curable composition including:
   a liquid A containing a reactive diluent, a thermally conductive filler, and an epoxy compound having two epoxy groups and having at least one selected from the group consisting of a divalent aliphatic hydrocarbon group and a polyether structure between the two epoxy groups; and
   a liquid B containing an amine compound, a plasticizer, and a thermally conductive filler.
<2> The two-component curable composition according to <1>, in which the epoxy compound has an epoxy equivalent of from 120 to 1000.
<3> The two-component curable composition according to <1> or <2>, in which the epoxy compound contains at least one selected from the group consisting of a dimer acid-modified epoxy compound and a polyalkylene glycol diglycidyl ether.
<4> The two-component curable composition according to any one of <1> to <3>, in which a viscosity of the epoxy compound at 25°C is from 20 mPa·s to 2500 mPa·s.
<5> The two-component curable composition according to any one of <1> to <4>, in which each of the thermally conductive fillers contained in the liquid A and the liquid B independently contains at least one selected from the group consisting of a magnesium oxide, a zinc oxide, and an aluminum nitride.
<6> A cured product of the two-component curable composition according to any one of <1> to <5>.

### Advantageous Effects of Invention

According to an embodiment of the disclosure, a two-component curable composition from which a cured product having excellent peelability is obtained or a cured product having excellent peelability is provided.

### DESCRIPTION OF EMBODIMENTS

Hereinafter, modes for carrying out the disclosure will be described in detail.

**In** the disclosure, "to" representing a numerical range represents a range including the numerical values stated as an upper limit and a lower limit, respectively. **In** addition, in a case where a unit is stated only for an upper limit in the numerical range represented using "to", this means that the lower limit value is also in the same unit.

**In** the disclosure, in a case where plural kinds of substances corresponding to each component are present in a composition, a proportional content or a content of each component in the composition means a total content rate or a total content of the plural kinds of substances present in the composition, unless otherwise specified.

**In** a numerical range indicated in the disclosure, an upper limit value or a lower limit value described in a certain numerical range may be replaced with a value shown in the examples.

**In** the disclosure, "(meth)acryl" is a word used as a concept including both acryl and methacryl, and "(meth)acryloyl" is a word used as a concept including both acryloyl and methacryloyl.

**In** the disclosure, "% by mass" and "% by weight" are synonymous, and "parts by mass" and "parts by weight" are synonymous.

**In** the disclosure, a combination of two or more preferable aspects is a more preferable aspect.

### (Two-Component Curable Composition)

A two-component curable composition according to the disclosure includes a liquid A containing a reactive diluent, and a thermally conductive filler, and an epoxy compound (hereinafter, also referred to as a flexible epoxy compound) having two epoxy groups and having at least one selected from the group consisting of an aliphatic hydrocarbon group and a polyether structure between the two epoxy groups; and a liquid B containing an amine compound, a plasticizer, and a thermally conductive filler.

With respect to a two-component curable composition that is applicable to a gap filler, a two-component curable composition is required that is capable of obtaining a cured product having excellent peelability as compared with a conventional two-component curable composition. When the two-component curable composition according to the disclosure includes the liquid A and the liquid B having the above compositions, a cured product is obtained that has excellent peelability as compared with the conventional two-component curable composition. The reason for this is presumed to be as follows.

The liquid A of the two-component curable composition according to the disclosure contains a flexible epoxy compound, a reactive diluent, and a thermally conductive filler. When the liquid A contains the flexible epoxy compound, the flexibility of the cured product that is to be obtained is improved. In addition, when the reactive diluent is included, the viscosity of the liquid A is lowered, making it easier to mix with the liquid B, and the flexibility of the cured product to be obtained is more likely to be improved.

The liquid B of the two-component curable composition according to the disclosure contains an amine compound, a plasticizer, and a thermally conductive filler. The amine compound acts as a curing agent. When the plasticizer is contained, the flexibility of the cured product to be obtained is more easily improved.

As described above, when the two-component curable composition according to the disclosure includes the liquid A and the liquid B having the above compositions, a cured product is obtained that has excellent peelability as compared with the conventional two-component curable composition.

When both the liquid A and the liquid B contain the thermally conductive fillers, the cured product to be obtained exhibits favorable thermal conductivity.

In the disclosure, "peelability" refers to the performance level when a cured product obtained from the two-component curable composition according to the disclosure is peeled off from an adherend.

Examples of the adherend include any adherend that comes into contact with a cured product obtained from the two-component curable composition according to the disclosure. Examples of the adherend include a heating element and a heat radiator.

Therefore, it is presumed that the two-component curable composition according to the disclosure can provide a cured product having excellent peelability.

Hereinafter, each component contained in the two-component curable composition according to the disclosure will be described.

### <Liquid A>

The two-component curable composition according to the disclosure includes the liquid A, and the liquid A contains a flexible epoxy compound, a reactive diluent, and a thermally conductive filler.

### <<Flexible Epoxy Compound>>

The liquid A contains an epoxy compound (flexible epoxy compound) having two epoxy groups and having at least one selected from the group consisting of a divalent aliphatic hydrocarbon group and a polyether structure between the two epoxy groups. When the flexible epoxy compound is contained, the flexibility of a cured product is improved.

The epoxy group refers to a 3-membered aliphatic cyclic group.

The polyether structure refers to a structure having a plurality of ether bonds.

The flexible epoxy compound may have at least one selected from the group consisting of a divalent aliphatic hydrocarbon group and a polyether structure between two epoxy groups, and may have other structures in one molecule.

Examples of the divalent aliphatic hydrocarbon group contained in the flexible epoxy compound include an alkylene group.

From the viewpoint of the peelability of a cured product, the number of carbon atoms in the alkylene group is preferably from 1 to 30, more preferably from 1 to 10, and still more preferably from 1 to 7.

Specific examples of the alkylene group include a methylene group, an ethylene group, an n-propylene group, an n-butylene group, an n-pentylene group, n-hexylene group, and an n-heptylene group.

Examples of the polyether structure contained in the flexible epoxy compound include a polyoxyalkylene group.

The polyoxyalkylene group means a group represented by Formula (1) below.

Formula (1) *-(OR₁)ₘ-*

In Formula (1), R₁ represents an alkylene group. m represents an integer of 2 or more. Note that * represents a bond.

An alkylene group represented by R₁ is preferably an alkylene group having from 2 to 5 carbon atoms.

m is preferably from 2 to 22, more preferably from 2 to 15, and still more preferably from 2 to 11.

From the viewpoint of peelability of a cured product, it is preferable that the flexible epoxy compound contain at least one selected from the group consisting of a dimer acid-modified epoxy compound and a polyalkylene glycol diglycidyl ether.

The dimer acid-modified epoxy compound is obtained by reacting an epoxy compound (a compound having at least two epoxy groups) with at least one carboxy group in a dimer acid structure.

The dimer acid is a dimer of an unsaturated fatty acid. As the unsaturated fatty acid serving as a raw material of the dimer acid, an unsaturated fatty acid having 18 carbon atoms such as oleic acid or linoleic acid is preferable. The dimer acid is obtained, for example, by polymerization of a plant-derived fat and oil containing an unsaturated fatty acid having 18 carbon atoms as a main component. A structure of the dimer acid may be either cyclic or acyclic.

Examples of commercially available products of the dimer acid-modified epoxy compound include "jER 871" and "jER 872" manufactured by Mitsubishi Chemical Corporation.

The polyalkylene glycol diglycidyl ether means a compound represented by Formula (2) below.

Formula (2) EP-CH₂-(OR₂)ₙ-O-CH₂-EP

In Formula (2), R₂ represents an alkylene group. n represents an integer of 2 or more. EP represents an epoxy group.

An alkylene group represented by R₂ is preferably an alkylene group having from 2 to 5 carbon atoms, and more preferably an alkylene group having from 2 to 3 carbon atoms.

n is preferably from 2 to 22, more preferably from 2 to15, and still more preferably from 2 to 11.

Examples of the polyalkylene glycol diglycidyl ether include polyethylene glycol diglycidyl ether, polypropylene glycol diglycidyl ether, and polybutylene glycol diglycidyl ether.

From the viewpoint of the peelability of the cured product and the viewpoint of the viscosity of the liquid A, the epoxy equivalent of the flexible epoxy compound is preferably from 100 to 1000, more preferably from 120 to 800, and still more preferably from 130 to 700.

When the epoxy equivalent of the flexible epoxy compound is within the above numerical ranges, the viscosity of the liquid A is easily lowered, and mixing with the liquid B is easily performed. This makes it easier to improve the flexibility of a cured product to be obtained.

The epoxy equivalent is a value measured according to ISO 3001 (1991).

From the viewpoint of the viscosity of the liquid A, the viscosity of the flexible epoxy compound at 25°C is preferably from 20 mPa·s to 2500 mPa·s, more preferably from 20 mPa·s to 1500 mPa·s, and still more preferably from 20 mPa·s to1000 mPa·s.

The viscosity of the flexible epoxy compound at 25°C is a value measured by a viscometer.

For the viscometer, for example, a B-type viscometer or DV-**III** ULTRA manufactured by Brookfield Corporation can be used.

The content of the flexible epoxy compound is preferably from 1% by mass to 10% by mass, and more preferably from 2% by mass to 8% by mass with respect to a total mass of the liquid A.

The liquid A may contain one kind of the flexible epoxy compound alone, or may contain two or more kinds thereof.

### <<Reactive Diluent>>

The liquid A contains a reactive diluent. When the reactive diluent is contained, the viscosity of the liquid A is lowered, making it easier to mix with the liquid B, and the flexibility of a cured product to be obtained is more likely to be improved.

The reactive diluent is a compound (hereinafter, also referred to as "epoxy compound for dilution") having one epoxy group and a hydrocarbon group in one molecule and having an epoxy group at a molecular terminal.

Here, the expression "having an epoxy group at a molecular terminal" means that one group is bonded to an epoxy group.

The reactive diluent only needs to have one epoxy group at the end of the molecule and a hydrocarbon group, and may have other structures in one molecule.

Examples of the epoxy compound for dilution include n-butyl glycidyl ether, isobutyl phenyl glycidyl ether, tert-butyl phenyl glycidyl ether, alkyl glycidyl ether having an alkyl group having from 12 to 14 carbon atoms, allyl glycidyl ether, 2-ethylhexyl glycidyl ether, styrene oxide, phenyl glycidyl ether, cresyl glycidyl ether, p-sec-butyl phenyl glycidyl ether, t-butyl phenyl glycidyl ether, glycidyl methacrylate, and tertiary carboxylic acid glycidyl ester.

The content of the reactive diluent is preferably from 1% by mass to5% by mass, and more preferably from 2% by mass to4% by mass with respect to a total mass of the liquid A.

The liquid A may contain one kind of the flexible epoxy compound alone, or may contain two or more kinds thereof.

### <<Thermally Conductive Filler>>

The liquid A contains a thermally conductive filler.

Here, the thermally conductive filler refers to a filler having high thermal conductivity. The thermally conductive filler refers to, for example, a filler having a thermal conductivity at 25°C of 5 W/m·K or more, preferably 10 W/m·K or more, and particularly preferably 30 W/m·K or more.

The thermal conductivity of the thermally conductive filler is a value measured by a laser flash method (JIS R 1611: 2010).

The thermally conductive fillers contained in the liquid A and the liquid B to be described later may be the same thermally conductive filler, or may be different thermally conductive fillers, and from a viewpoint of storage stability and mixability, the thermally conductive fillers contained in the liquid A and the liquid B to be described later are preferably the same thermally conductive filler.

The same thermally conductive filler means that the kinds and ratios of elements are exactly the same.

The thermally conductive filler is not particularly limited, and a known filler used for TIM can be used. From the viewpoint of thermal conductivity, the thermally conductive fillers contained in the liquid A and the liquid B each independently preferably contain at least one selected from the group consisting of a magnesium oxide, a zinc oxide, and an aluminum nitride, and more preferably contain at least one selected from the group consisting of a magnesium oxide and an aluminum nitride.

### -Magnesium Oxide-

The magnesium oxide used as the thermally conductive filler is not particularly limited, and examples thereof include MgO usually used as a thermally conductive filler.

The liquid A contained in the two-component curable composition may contain one kind of magnesium oxide alone or may contain two or more kinds thereof.

The magnesium oxide is preferably in the form of particles, and from a viewpoint of achieving both viscosity and thermal conductivity, particles having a volume average particle diameter of 10 µm or more are preferable, particles having a volume average particle diameter of from 10 µm to 80 µm are more preferable, and particles having a volume average particle diameter of from 10 µm to 60 µm are still more preferable.

The volume average particle diameter is a value measured by a method to be described later.

In a case where the liquid A contains magnesium oxide, it is preferable to contain two or more kinds of magnesium oxide having different volume average particle diameters, from a viewpoint of highly filling the thermally conductive filler into the composition.

In a case where the liquid A contains two or more kinds of magnesium oxide having different volume average particle diameters, a ratio of the maximum volume average particle diameter to the minimum volume particle diameter is preferably 5 times or more, from a viewpoint of highly filling the thermally conductive filler into the composition.

The minimum volume particle diameter and the maximum volume average particle diameter indicate a minimum volume particle diameter and a maximum volume average particle diameter determined in the obtained volume distribution in the measurement of a volume average particle diameter to be described later.

In a case where the liquid A contains magnesium oxide, the magnesium oxide contained in the liquid A more preferably includes two or more kinds of magnesium oxides in which volume average particle diameters are from 0.05 µm to 100 µm, the volume average particle diameters are different, and a difference in volume average particle diameter is 40 µm or more, from a viewpoint of highly filling with the thermally conductive filler.

In a case where the liquid A contains two or more kinds of magnesium oxides having different volume average particle diameters, the content of magnesium oxide having the maximum volume average particle diameter determined in the volume distribution is preferably 50% by mass or more with respect to a total mass of magnesium oxides contained in the thermally conductive filler.

### -Zinc Oxide-

The zinc oxide applied as the thermally conductive filler is not particularly limited, and examples thereof include ZnO usually used as a thermally conductive filler.

The zinc oxide is preferably in the form of particles, and from a viewpoint of achieving both viscosity and thermal conductivity, particles having a volume average particle diameter of from 0.05 µm to 100 µm are preferable, and particles having a volume average particle diameter of from 0.1 µm to 50 µm are more preferable.

In addition, from a viewpoint of high conductivity, a volume average particle diameter of zinc oxide is preferably 30 µm or more, and more preferably from 30 µm to 50 µm.

### -Aluminum Nitride-

The aluminum nitride applied as the thermally conductive filler is not particularly limited, and examples thereof include AlN usually used as a thermally conductive filler.

The aluminum nitride is preferably in the form of particles, and from a viewpoint of achieving both viscosity and thermal conductivity, particles having a volume average particle diameter of from 0.05 µm to 120 µm are preferable, and particles having a volume average particle diameter of from 0.1 µm to 80 µm are more preferable.

### -Content-

The content of the thermally conductive filler contained in the liquid A is preferably 50% by mass or more, more preferably from 70% by mass to 98% by mass, and still more preferably from 85% by mass to 98% by mass with respect to a total mass of the liquid A from a viewpoint of thermal conductivity.

The content of the thermally conductive filler means a total content of magnesium oxide, zinc oxide, aluminum nitride, and other filler compounds to be described later.

The liquid A contained in the two-component curable composition may contain one thermally conductive filler alone or may contain two or more kinds thereof.

In a case where the thermally conductive filler contains magnesium oxide, from a viewpoint of thermal conductivity, the content of magnesium oxide is preferably 50% by mass or more, more preferably from 70% by mass to 100% by mass, and still more preferably from 85% by mass to 100% by mass with respect to a total mass of the thermally conductive filler contained in the liquid A.

The total mass of the thermally conductive filler contained in the liquid A means the total mass of zinc oxide and magnesium oxide contained in the liquid A, and other filler compounds to be described later.

The liquid A contained in the two-component curable composition may contain one kind of magnesium oxide alone or may contain two or more kinds thereof.

**In** a case where the liquid A contains both magnesium oxide and aluminum nitride as the thermally conductive filler, the content of magnesium oxide (the total content in a case where two or more kinds of magnesium oxide are contained) is preferably 50% by mass or more, more preferably from 70% by mass to 100% by mass, and still more preferably from 85% by mass to 100% by mass with respect to a total mass of the thermally conductive filler contained in the liquid A from a viewpoint of obtaining a cured product having good peelability, shape stability, and the property of suppressing a change in thermal conductivity of a cured product to be obtained.

**In** a case where the liquid A contains both magnesium oxide and aluminum nitride as the thermally conductive filler, a content ratio of magnesium oxide to aluminum nitride (magnesium oxide:aluminum nitride) in the thermally conductive filler is preferably from 10:1 to 1:10, more preferably from 10:1 to 1:1, and still more preferably from 9.5:1 to 5:1 on a mass basis, from a viewpoint of obtaining a cured product having good peelability, shape stability, and the property of suppressing a change in thermal conductivity of a cured product to be obtained.

The volume average particle diameter is calculated as a volume average particle diameter (50% diameter) from a measured value (particle diameter distribution) measured at a laser wavelength of 405 nm by, for example, a particle size distribution measuring apparatus (for example, product name; Nanoparticle size distribution measuring apparatus SALD-7500nano manufactured by Shimadzu Corporation).

The magnesium oxide preferably has two or more peaks in the particle size distribution from a viewpoint of highly filling the thermally conductive filler into the composition.

The liquid A contained in the two-component curable composition according to the disclosure may contain, as the thermally conductive filler, a compound (in the present specification, also referred to as "other filler compounds") other than magnesium oxide, zinc oxide, and aluminum nitride.

Examples of other filler compounds include alumina (aluminum oxide), aluminum hydroxide, boron nitride, and carbon.

**In** a case where the thermally conductive filler contains other filler compounds, the content of the other filler compounds is preferably 10% by mass or less, more preferably 5% by mass or less, and still more preferably 1% by mass or less with respect to atotal mass of the thermally conductive filler.

A lower limit is not particularly limited, and may be 0% by mass.

### <Liquid B>

The two-component curable composition according to the disclosure contains the liquid A and the liquid B, the liquid B contains an amine compound, a plasticizer, and a thermally conductive filler.

### <<Amine Compound>>

The amine compound means a compound having an amino group.

Examples of the amine compound include an aliphatic amine, an aromatic amine, and a polyether amine.

The aliphatic amine refers to an amine in which an amino group is directly bonded to an aliphatic hydrocarbon group, and refers to an amine compound other than polyetheramine.

The aromatic amine refers to an amine in which an amino group is directly bonded to an aromatic hydrocarbon group, and refers to an amine compound other than polyetheramine.

The polyetheramine refers to an amine compound having an amino group and two or more etheric oxygen atoms in one molecule.

The aliphatic amine is not particularly limited, and examples thereof include diethylenetriamine, triethylenetetraamine, tetraethylenepentamine, m-xylenediamine, trimethylhexamethylenediamine, 2-methylpentamethylenediamine, isophoronediamine, 1,3-bisaminomethylcyclohexane, bis(4-aminocyclohexyl)methane, norbomenediamine, and 1,2-diaminocyclohexane.

The aromatic amine is not particularly limited, and examples thereof include diaminodiphenylmethane, m-phenylenediamine, diaminodiphenylsulfone, diethyltoluenediamine, trimethylene bis(4-aminobenzoate), and polytetramethylene oxide-dip-aminobenzoate.

The polyetheramine is preferably a compound represented by Formula (3) below.

Formula (3) H₂N-R₃-(OR₄)₁-O-R₃-NH₂

In Formula (3), R₃ and R₄ each represents an alkylene group. l represents an integer of 2 or more.

An alkylene group represented by R₃ is preferably an alkylene group having 2from to6 carbon atoms, and more preferably an alkylene group having from 2 to 4 carbon atoms.

The alkylene group represented by R₄ is preferably an alkylene group having from 2 to5carbon atoms, and more preferably an alkylene group having from 2 to3 carbon atoms.

l is preferably from 1 to 40, more preferably from 2 to35, and still more preferably from 4 to 32.

Specific examples of the polyetheramine include polyoxypropylenediamine (a compound in which R₃ and R₄ are propylene groups, and l is 1 or more), polyoxyethylenediamine (a compound in which R₃ and R₄ are ethylene groups, and l is 1 or more), and 4,7,10-trioxa-tridecane-1,13-diamine (a compound in which R₃ is a trimethylene group, R₄ is an ethylene group, and l is 2).

### <<Plasticizer>>

The liquid B contains a plasticizer. When a plasticizer is contained, the flexibility of a cured product to be obtained is more easily improved.

The plasticizer is not particularly limited, and examples thereof include a polymer that can be used as a plasticizer, a fatty acid ester compound having an unsaturated hydrocarbon group, an aromatic carboxylic acid ester compound, an epoxy-based plasticizer, and an oil containing a fatty acid having an unsaturated hydrocarbon group and an aromatic carboxylic acid.

In the disclosure, the "polymer" means a compound having a weight average molecular weight (Mw) of 1,000 or more.

In the disclosure, the concept of "polymer" also includes so-called oligomers.

Examples of the polymer include an acrylic polymer, a polyester-based polymer, a polyurethane-based polymer, and a silicone polymer, and from a viewpoint of peelability of a cured product to be obtained, an acrylic polymer is preferable.

In a case where the plasticizer is a polymer, the plasticizer is preferably a polymer having a glass transition temperature of -20°C or lower, and more preferably an acrylic polymer having a glass transition temperature of -20°C or lower, from a viewpoint of the peelability of a cured product to be obtained.

In a case where the plasticizer is a polymer, the plasticizer is preferably a polymer having a glass transition temperature of from -90°C to -20°C, and more preferably an acrylic polymer having a glass transition temperature of from -90°C to-20°C, from a viewpoint of the peelability.

The glass transition temperature (Tg) of the polymer is determined by examining an inflection point of a DSC curve measured using a differential thermal analyzer (DSC).

Examples of the fatty acid ester compound having an unsaturated hydrocarbon group include an ester compound of palmitoleic acid, oleic acid, linoleic acid, linolenic acid, or the like.

Examples of the aromatic carboxylic acid ester compound include an ester compound of phthalic acid, terephthalic acid, benzoic acid, trimellitic acid, or the like.

The epoxy-based plasticizer is a compound containing an epoxy group and a hydrocarbon group and having an epoxy group in a molecule.

Here, the expression "having an epoxy group in a molecule" means that an epoxy group has two bonds, and two groups are bonded to the epoxy group.

Examples of the epoxy-based plasticizer include SANSO CIZER E-PS (di-2-ethylhexyl 4,5-epoxycyclohexane-1,2-dicarboxylate, manufactured by New Japan Chemical Co., Ltd.), SANSO CIZER E-PO (di(9,10-epoxystearyl) 4,5-epoxycyclohexane-1,2-dicarboxylate, manufactured by New Japan Chemical Co., Ltd.), SANSO CIZER E-2000H (epoxidized soybean oil, manufactured by New Japan Chemical Co., Ltd.), SANSO CIZER E-9000H (epoxidized linseed oil, manufactured by New Japan Chemical Co., Ltd.), ADEKA CIZER O-130P (epoxidized soybean oil, manufactured by ADEKA Corporation), and ADEKA CIZER O-180A (epoxidized linseed oil, manufactured by ADEKA Corporation).

From the viewpoint of compatibility, the plasticizer preferably contains a compound having a solubility parameter (SP) value of 11 or more.

The SP value is a cohesive energy density, that is, a value expressed as the square root of the evaporation energy per unit volume of one molecule.

The SP value is a value calculated by an Okitsu method.

Examples of the method for calculating the SP value by the Okitsu method include a method detailed in, for example, Journal of the Adhesion Society of Japan, Vol. 29, No. 6 (1993), pages 249-259.

Examples of the compound having an SP value of 11 or more include an acrylic polymer.

The acrylic polymer preferably contains a constituent unit formed of an acrylic acid ester from a viewpoint of compatibility.

A (meth)acrylic ester is preferably an alkyl (meth)acrylate. Examples of (meth)acrylic ester include methyl (meth)acrylate, ethyl (meth)acrylate, butyl (meth)acrylate, and isobutyl (meth)acrylate.

Also, alkyl acrylate may be a nonfunctional alkyl acrylate, or may have a functional group such as a carboxy group or a hydroxy group (hydroxyl group).

The functional group of the alkyl acrylate is preferably a hydroxy group.

The acrylic polymer may be a polymer having a structure represented by Formula (P^{AC}) below.

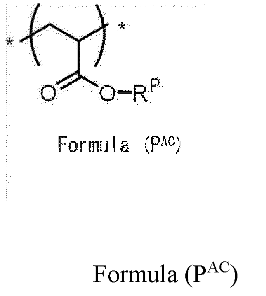

In Formula (P^{AC}), R^{P} represents a hydrogen atom or an alkyl group.

In Formula (P^{AC}), an alkyl group may have a substituent. Examples of the substituent include a carboxy group, a hydroxyl group, and an amino group. The substituent is preferably a carboxy group or a hydroxy group, and more preferably a hydroxy group.

As the alkyl group, a saturated alkyl group is preferable, and an alkyl group having from 1 to 4 carbon atoms is more preferable.

### -Content-

A content of the plasticizer (a total amount in a case where two or more kinds of plasticizers are contained) is preferably from 3% by mass to 15% by mass, and more preferably from 5% by mass to 12% by mass, with respect to a total mass of the liquid B, from a viewpoint of achieving all of mixability, heat resistance, and peelability.

The content of the compound having an SP value of 11 or more with respect to the content of the plasticizer may be large from a viewpoint of compatibility, and is preferably small from a viewpoint of the viscosity of the liquid B. From such a viewpoint, the content of the compound having an SP value of 11 or more is preferably from 5% by mass to 90% by mass, and more preferably from 8% by mass to50% by mass , with respect to a content of the plasticizer.

The liquid B contained in the two-component curable composition may contain one kind of plasticizer alone or may contain two or more kinds thereof.

### <<Thermally Conductive Filler>>

The liquid B contains a thermally conductive filler. The thermally conductive filler contained in the liquid B has the same meaning as the thermally conductive filler contained in the liquid A described above, and the preferred embodiment is also the same.

The thermally conductive filler contained in the liquid B may be the same as the thermally conductive filler contained in the liquid A or may be different from the thermally conductive filler contained in the liquid A, and is preferably the same as the thermally conductive filler contained in the liquid A, from a viewpoint of storage stability and mixability.

From the viewpoint of thermal conductivity, the content of the thermally conductive filler contained in the liquid B is preferably 50% by mass or more, more preferably from 70% by mass to 98% by mass, and still more preferably from 85% by mass to 98% by mass with respect to a total mass of the liquid B.

### <<Other Additives>>

The two-component curable composition according to the disclosure may contain components (hereinafter, also referred to as "other additives") in the liquid A and/or the liquid B if necessary, in addition to the flexible epoxy compound, the reactive diluent, the thermally conductive filler, amine compound, and the plasticizer.

As other additives, additives such as an antioxidant, a rust inhibitor, a flame retardant, and a colorant can be appropriately blended.

The additives may be used singly or two or more kinds thereof may be used in combination.

Examples of the antioxidant include benzotriazole, tolyltriazole, thiadiazole, and benzimidazole.

Examples of the rust inhibitor include a sulfonic acid metal salt-based compound and a sorbitan compound.

Examples of the flame retardant include tetrabromobisphenol A and a derivative thereof; tetrabromobisphenol S and a derivative thereof; ethylenebispentabromodiphenyl and a derivative thereof; tris(bromoneopentyl) phosphate and a derivative thereof; ethylene bistetrabromophthalimide and a derivative thereof; triallyl isocyanurate and a derivative thereof; a phosphate compound and a derivative thereof, or a mixture thereof; melamine sulfate; red phosphorus; and an alkoxyimino group hindered amine-based compound and a derivative thereof.

The flame retardant may be used singly or two or more kinds thereof may be used in combination.

Examples of the colorant include various pigments such as carbon black, chrome yellow, Hansa yellow, benzidine yellow, threne yellow, quinoline yellow, pigment yellow, permanent orange GTR, pyrazolone orange, vulcan orange, watch young red, permanent red, brilliant carmine 3B, brilliant carmine 6B, duPont oil red, pyrazolone red, lithol red, rhodamine B lake, lake red C, pigment red, rose bengal, aniline blue, ultramarine blue, chalco oil blue, methylene blue chloride, phthalocyanine blue, pigment blue, phthalocyanine green, and malachite green oxalate; and various dyes such as acridine-based, xanthene-based, azo type, benzoquinone-based, azine-based, anthraquinone-based, thioindigo type, dioxazine-based, thiazine-based, azomethine-based, indigo type, phthalocyanine-based, aniline black type, polymethine-based, triphenylmethane-based, diphenylmethane-based, and thiazole-based dyes.

The colorant may be used singly or two or more kinds thereof may be used in combination.

### <Mass Ratio between Liquid A and Liquid B>

The mass ratio between the liquid A and the liquid B is preferably from 100:70 to 100:130, more preferably from 100:80 to 100:120, and still more preferably from 100:90 to 100:110 on a mass basis from a viewpoint of mixability and usability.

### (Method for Producing Two-Component Curable Composition)

A method for producing the two-component curable composition according to the disclosure is not particularly limited, and for example, the two-component curable composition can be produced by the following method.

A flexible epoxy compound, a reactive diluent, and a thermally conductive filler, and if necessary, other additives are put into a stirring container, and stirred and mixed to obtain the liquid A contained in the two-component curable composition according to the disclosure.

In addition, an amine compound, a plasticizer, and a thermally conductive filler, and if necessary, other additives are put into a stirring container, and stirred and mixed to obtain a liquid B contained in the two-component curable composition according to the disclosure.

A known stirrer or the like can be used for stirring and mixing.

In addition, the mixing order of the materials (a flexible epoxy compound, a reactive diluent, a thermally conductive filler, amine compound, and a plasticizer, and if necessary, other additives) is not particularly limited.

### (Cured Product)

The cured product according to the disclosure is a cured product of the two-component curable composition according to the disclosure. A method for curing the two-component curable composition is not particularly limited, and the liquid A and the liquid B contained in the two-component curable composition according to the disclosure may be mixed.

The method for mixing the liquid A and the liquid B is not particularly limited, and a known stirrer or the like can also be used.

The mixing ratio of the liquid A and the liquid B (liquid A:liquid B) is preferably from 100:80 to 100:120, more preferably from 100:90 to 100:110, and still more preferably from 100:95 to 100:105 on a mass basis from a viewpoint of mixability and usability.

A temperature (that is, a curing temperature) when mixing the liquid A and the liquid B is not particularly limited, and may be room temperature (25°C) or may be from 10°C to 40°C.

Further, after the liquid A and the liquid B contained in the two-component curable composition according to the disclosure are mixed, irradiation with an active energy ray, heating, or the like may be further performed.

In the case of heating, a heating temperature is preferably 70°C or higher, and more preferably 80°C or higher. Also, a heating time is preferably from 30 minutes to 120 minutes.

A thermal conductivity of the cured product according to the disclosure is preferably from 0.5 [W/(m·K)] to 50 [W/(m·K)], and preferably from 1 [W/(m·K)] to 20 [W/(m·K)] from a viewpoint of thermal conductivity.

As the softness of the cured product according to the disclosure, from a viewpoint of peelability, the Asker C hardness is preferably 70 or less, and more preferably 66 or less.

Similarly, the Shore OO hardness is preferably 90 or less, and more preferably 86 or less.

In the disclosure, the Asker C hardness is determined in accordance with JIS K 7312: 1996, and the Shore OO hardness is determined in accordance with ASTM D2240.

### <Application>

The two-component curable composition according to the disclosure can be suitably used, for example, as a TIM with which a recess (a gap between a heat generator and a heat radiator) formed in a substrate is filled.

The two-component curable composition according to the disclosure is easily peeled off from an adherend such as a heat generator or a heat radiator from a viewpoint of excellent peelability, and the adherend can be reused, and therefore can be suitably applied as a gap filler.

### [Examples]

Hereinafter, the two-component curable composition according to the disclosure will be specifically described with reference to Examples. Note that the two-component curable composition according to the disclosure is not limited at all by these Examples.

### (Examples 1 to 6 and Comparative Example 1)

Raw materials were blended in the amounts (parts by mass) shown in Table 1, and mixed using a planetary centrifugal mixer (product name; THINKY MIXER ARV-310 manufactured by THINKY CORPORATION) at 2,000 revolutions per minute (rpm) for 2 minutes under atmospheric pressure to prepare a two-component curable composition.

Using the two-component curable compositions prepared in Examples 1 to 6 and Comparative Example 1, the following evaluations were performed. The results are shown in Table 1.

### -Evaluation-

### -Shore OO hardness (sample thickness: 6 mm)-

The Shore OO hardness of a cured product of a two-component curable composition was measured in accordance with ASTM D2240.

After the liquid A and the liquid B were mixed at the mixing ratio shown in Table 1, a curable composition was molded to dimensions of 30 mm × 15 mm × 6 mm (thickness 6 mm) and cured under the two curing conditions (curing condition A and curing condition B) shown in Table 1.

The Shore OO hardness of the cured product obtained under each curing condition was measured using a hardness meter (durometer) (product name: GS-754G, manufactured by TECLOCK Corporation).

### -Asker C hardness (sample thickness: 6 mm)-

The Asker C hardness of a cured product of a curable composition was measured in accordance with JIS K 7312: 1996.

After the liquid A and the liquid B were mixed at the mixing ratio shown in Table 1, a curable composition was molded to dimensions of 30 mm × 15 mm × 6 mm (thickness 6 mm) and cured under the two curing conditions (curing condition A and curing condition B) shown in Table 1. For the cured product obtained under each curing condition, the Asker C hardness was measured using an ASKER DUROMETER TYPE C (manufactured by Kobunshi Keiki Co., Ltd.).

### -Evaluation of Peelability-

After the liquid A and the liquid B were mixed at the mixing ratio shown in Table 1, a curable composition was molded on an aluminum plate to dimensions of 30 mm × 15 mm × 6 mm (thickness 6 mm) and cured under the two curing conditions (curing condition A and curing condition B) shown in Table 1.

The obtained cured product was pulled by hand from above the aluminum plate, and evaluation performed as to whether or not the cured product could be peeled off.

The evaluation criteria are as follows.
A: Easy to peel off (the cured product is soft and bent)
B: Less likely to be peeled off (the cured product is hard and not bent)
C: Not peeled off

**[Table 1]**

| | | | Example·1 | Example·2 | Example·3 | Example·4 | Example·5 | Example·6 | Comparative Example·1 |
|---|---|---|---|---|---|---|---|---|---|
| | Flexible·epoxy· compound | jER·871 | 6.6 | 6.6 | 6.6 | | | | |
| | | EX-920 | | | | 6.6 | 6.6 | 6.6 | |
| | Reactive·diluent | ED-502S | 3.1 | 3.1 | 3.1 | 3.1 | 3.1 | 3.1 | 3.1 |
| | Other·additives | jER\|·827 | 1.5 | 1,5 | 1.5 | 1.5 | 1.5 | 1.5 | 8.1 |
| | | SANSO·CIZER·E-6000 | 1.0 | 1.0 | 1.0 | 1.0 | 1.0 | 1.0 | 1.0 |
| Liquid·A | | DISPERBYK-2152 | 0.4 | 0.4 | 0.4 | 0.4 | 0.4 | 0.4 | 0.4 |
| | | CLAYTONE-40 | 0.8 | 0.8 | 0.8 | 0.8 | 0.8 | 0.8 | 0.8 |
| | | Carbon·black·#25 | 0.2 | 0.2 | 0.2 | 0.2 | 0.2 | 0.2 | 0.2 |
| | Thermally-conductive · filler | HF-01Dc | 7.9 | 7.9 | 7.9 | 7.9 | 7.9 | 7.9 | 7.9 |
| | | RF-10CS-SC | 23.5 | 23.5 | 23.5 | 23.5 | 23.5 | 23.5 | 23.5 |
| | | DMG-60 | 55.0 | 55.0 | 55.0 | 55.0 | 55.0 | 55.0 | 55.0 |
| | Total | | 100.0 | 100.0 | 100.0 | 100.0 | 100.0 | 100.0 | 100.0 |
| | Amine·compound | LUCKAMIDE·WN-620 | 2.4 | 2.7 | 3.0 | 4.0 | 4.5 | 5.0 | 3.9 |
| | Plasticizer | SANSO·CIZER·E-6000 | 10.1 | 9.8 | 9.5 | 8.5 | 8.0 | 7.5 | 8.6 |
| | | ARUFON·UP-1021 | 1.0 | 1.0 | 1.0 | 1.0 | 1.0 | 1.0 | 1.0 |
| Liquid·B | Other·additives | DISPERBYK-2152 | 0.4 | 0.4 | 0.4 | 0.4 | 0.4 | 0.4 | 0.4 |
| | | CLAYTONE-40 | 0.7 | 0.7 | 0.7 | 0.7 | 0.7 | 0.7 | 0.7 |
| | Thermally·conductive· filler | HF-01Dc | 7.8 | 7.8 | 7.8 | 7.8 | 7.8 | 7.8 | 7.8 |
| | | RF-10CS-SC | 23.3 | 23.3 | 23.3 | 23.3 | 23.3 | 23.3 | 23.3 |
| | | DMG-60 | 54.3 | 54.3 | 54.3 | 54.3 | 54.3 | 54.3 | 54.3 |
| | Total | | 100.0 | 100.0 | 100.0 | 100.0 | 100.0 | 100.0 | 100.0 |
| Mixing·ratio·(Liquid·A/Liquid·B)·(Mass·ratio) | | | 100/100 | 100/100 | 100/100 | 100/100 | 100/100 | 100/100 | 100/100 |
| Equivalent·ratio | | | 0.8 | 0.9 | 1 | 0.8 | 0.9 | 1 | 0.8 |
| Curing·condition·A | | | 25°C,·24·h | 25°C,·24·h | 25°C,·24·h | 25°C,·24·h | 25°C,·24·h | 25°C,·24·h | 25°C,·24·h |
| Curing·condition·B | | | 25°C,·168·h | 25°C,·168·h | 25°C,·168·h | 25°C,·168·h | 25°C,·168·h | 25°C,·168·h | 25°C,·168·h |
| Peelability | | Curing·condition·A | A | A | A | A | A | B | C |
| | | Curing ·condition·B | A | A | A | A | B | B | C |
| Shore·OO·hardness | | Curing ·condition·A | 47 | 45 | 50 | 70 | 81 | 90 | 100·or·more |
| | | Curing ·condition·B | 80 | 75 | 72 | 86 | 91 | 94 | 100·or·more |
| Asker·C·hardness | | Curing ·condition·A | 30 | 26 | 30 | 52 | 61 | 76 | 100·or·more |
| | | Curing ·condition·B | 66 | 55 | 55 | 60 | 83 | 93 | 100·or·more |

In Table 1, "equivalent ratio" refers to a ratio between the moral equivalent number of hydrogen atoms contained in an amino group of an amine compound contained in a curable composition obtained by mixing the A liquid and the liquid B, and the molar equivalent number of epoxy groups in the flexible epoxy compound (Molar equivalent number of active hydrogen in amine compound:Molar equivalent number of epoxy group in flexible epoxy compound).

### <<Flexible Epoxy Compound>>

• jER 871: jER 871 manufactured by Mitsubishi Chemical Corporation, dimer acid-modified epoxy compound, epoxy equivalent: 416, viscosity at 25°C: 650 mPa·s
• EX-920: DENACOL EX-920 manufactured by Nagase ChemteX Corporation, polypropylene glycol diglycidyl ether, epoxy equivalent: 176, viscosity at 25°C: 20 mPa·s

### <<Reactive Diluent>>

• ED-502S: ADEKA GLYCIROL ED-502 S manufactured by ADEKA CORPORATION, C12-13 mixed higher alcohol glycidyl ether (alkyl glycidyl ether having an alkyl group having 12 or 13 carbon atoms), epoxy equivalent: 320, viscosity at 25°C: 10 mPa·s

### <<Thermally Conductive Filler>>

• HF-01Dc: Product name: HF-01Dc manufactured by Tokuyama Corporation, aluminum nitride particles, volume average particle diameter: 1 µm
• RF-10CS-SC: Product name: RF-10CS-SC manufactured by Ube Materials Co., Ltd., magnesium oxide particles, volume average particle diameter: 1 µm
• DMG-60: Product name: DMG-60 manufactured by Denka Company Limited, magnesium oxide particles, volume average particle diameter: 56 µm

### <<Amine Compound>>

• LUCKAMIDE WN-620: LUCKAMIDE WN-620 manufactured by DIC Corporation, modified aliphatic polyamine

### <<Plasticizer>>

• SANSO CIZER E-6000: SANSO CIZER E-6000 manufactured by New Japan Chemical Co., Ltd., epoxidized fatty acid 2-ethylhexyl (epoxy-based plasticizer), SP value: 8.5
. ARUFON UP-1021: ARUFON UP-1021 manufactured by Toagosei Co., Ltd., acrylic polymer, SP value: 13.6

### <<Other Additives>>

. jER 827: jER 827 manufactured by Mitsubishi Chemical Corporation, bisphenol A type epoxy resin
• DISPERBYK-2152: DISPERBYK-2152 manufactured by BYK Japan KK, polymer polyester
• CLAYTONE-40: CLAYTONE-40 manufactured by BYK Japan KK, organically modified bentonite
• CARBON BLACK #25: CARBON BLACK #25 manufactured by Mitsubishi Chemical Corporation, carbon black

From the above results, it is found that the two-component curable composition and the cured product of the present Examples are a two-component curable composition from which a cured product having excellent peelability is obtained, and a cured product having excellent peelability.

The entire disclosure of Japanese Patent Application No. 2022-061110 filed on March 31, 2022 is incorporated herein by reference. All the literature, patent application, and technical standards cited herein are also herein incorporated to the same extent as provided for specifically and severally with respect to an individual literature, patent application, and technical standard to the effect that the same should be so incorporated by reference.

## Claims

1. A two-component curable composition, comprising:
a liquid A containing a reactive diluent, a thermally conductive filler, and an epoxy compound having two epoxy groups and having at least one selected from the group consisting of a divalent aliphatic hydrocarbon group and a polyether structure between the two epoxy groups; and
a liquid B containing an amine compound, a plasticizer, and a thermally conductive filler.

2. The two-component curable composition according to claim 1, wherein the epoxy compound has an epoxy equivalent of from 120 to 1000.

3. The two-component curable composition according to claim 1 or 2, wherein the epoxy compound contains at least one selected from the group consisting of a dimer acid-modified epoxy compound and a polyalkylene glycol diglycidyl ether.

4. The two-component curable composition according to any one of claims 1 to 3, wherein a viscosity of the epoxy compound at 25°C is from 20 mPa·s to 2500 mPa·s.

5. The two-component curable composition according to any one of claims 1 to 4, wherein each of the thermally conductive fillers contained in the liquid A and the liquid B independently contains at least one selected from the group consisting of a magnesium oxide, a zinc oxide, and an aluminum nitride.

6. A cured product of the two-component curable composition according to any one of claims 1 to 5.
